# EUROPEAN PATENT SPECIFICATION

(11) **EP 4 016 372 B1**
(45) Date of publication and mention of the grant of the patent: **21.10.2026**
(21) Application number: 21216394.3
(22) Date of filing: 21.12.2021
(51) Int. Cl.: G06K 7/00, B64D 11/04, G06K 19/077, G06Q 10/00, H04B 7/185

(54) **AIRCRAFT GALLEY INSERT WITH RFID TAG FOR DATA LOGGING, CONFIGURING AND COMMISSIONING**
FLUGZEUG-KÜCHEN-EINSATZ MIT RFID-TAG FÜR DATENAUFZEICHNUNG, KONFIGURATION UND INBETRIEBNAHME
INSERT DE CUISINE D'AVION AVEC ÉTIQUETTE RFID POUR L'ENREGISTREMENT DES DONNÉES, LA CONFIGURATION ET LA MISE EN SERVICE

(30) Priority: 21.12.2020 US 202017129601
(43) Date of publication of application: 22.06.2022
(73) Proprietor: B/E Aerospace, Inc., Winston Salem, NC 27105 (US)
(72) Inventor: HUIJSING, Hans, Ijsselstein (NL)
(74) Representative: Dehns

(56) References cited:
- EP-A1- 3 553 717
- US-A1- 2009 112 407
- US-A1- 2009 132 697
- US-A1- 2011 148 664
- US-A1- 2018 308 037
- US-A1- 2019 210 730
- US-A1- 2019 311 318
- US-A1- 2020 108 932
- US-B1- 8 897 951

## Description

### BACKGROUND OF THE INVENTION

### 1. Field of the Invention

The subject invention is directed to a galley insert, and more particularly, to an oven insert for use in an aircraft galley that employs an RFID tag for data logging, as well as for configuring and commissioning the insert upon installation on the aircraft.

### 2. Description of Related Art

Hot meals on board passenger aircraft are typically prepared in oven inserts installed in the galleys of the aircraft. These oven inserts can use steam, convection or induction for cooking meals. Currently, ovens installed in the galley of an aircraft include an RFID tag or chip that stores static historical data programmed during production or repair, which can be reported to a maintenance engineer when the chip is activated by an RFID scanner or reader. Aircraft galley data transfer is disclosed in EP 3553717, US 8,897,951 and US 2009/0112407.

However, current RFID tags are not configured to store log data, such as usage logs and error logs, which would be useful to maintenance engineers. It would be beneficial therefore, to replace the current RFID tags used in galley inserts with a data transfer system that can log usage and error data and report that data to maintenance engineers by way of current RFID readers or scanners.

It would also be beneficial to provide a data transfer system for galley inserts that can be used to configure and commission the insert upon installation in an aircraft, through a secure wireless interface.

### SUMMARY OF THE DISCLOSURE

The subject invention provides a data transfer system as defined by claim 1.

It is envisioned that data transfer system of the subject invention would be particularly useful when deployed in an oven insert. However those skilled in the art will readily appreciate that the data transfer system of the subject invention can be utilized in a variety of different aircraft galley inserts used in food and beverage preparation, including for example, water heaters, beverage chillers, espresso machines and other similar appliances.

Preferably, the electronic interface is configured as a Human Machine Interface (HMI) or more generally as control electronics. The antenna of the data transfer system is embedded in a Printed Circuit Board (PCB), and the PCB is located in a housing portion of the galley insert, for example, in a front upper housing portion of the insert. The wireless communication protocol is a Radio-Frequency Identification (RFID) protocol, for example, a Near-Field Communication (NFC) protocol, which is essentially a specialized subset or branch of the RFID protocol. It is envisioned that the data added to the message is at least one of usage log data and error log data.

In addition, the antenna is configured to communicate with a Personal Electronic Device (PED), which is adapted to download aircraft configuration information from a database to commission the insert upon installation in the aircraft and/or to update oven configuration information such as settings or the like after installation. The PED can also be adapted and configured to send error reports to facilitate oven maintenance and/or repair. The antenna is also configured to support communication between the over insert and an RFID reader during production and/or maintenance.

These and other features of the galley insert of the subject invention will become more readily apparent to those having ordinary skill in the art to which the subject invention appertains from the detailed description of the preferred embodiments taken in conjunction with the following brief description of the drawings.

### BRIEF DESCRIPTION OF THE DRAWINGS

So that those having ordinary skill in the art will readily understand how to make and use the data transfer system of the subject invention without undue experimentation, preferred embodiments thereof will be described in detail herein below with reference to the figures wherein:
Fig. 1 is a perspective view of an oven insert that includes an antenna embedded in a PCB located in a front housing portion of the oven insert;
Fig. 2 is an enlarged perspective view of the PCB shown in Fig. 1, where the antenna is embedded in the PCB as a trace configuration, but which may alternatively be comprised of separate components installed onto the PCB; and
Fig. 3 is an illustration of an oven insert that employs the data transfer system of the subject invention, wherein the system is in wireless communication with a handheld RFID reader to report usage log data and/or error log data, and wherein the system is in wireless communication with a PED to configure and commission the oven insert over a secure network.

### DETAILED DESCRIPTION OF THE PREFERRED EMBODIMENTS

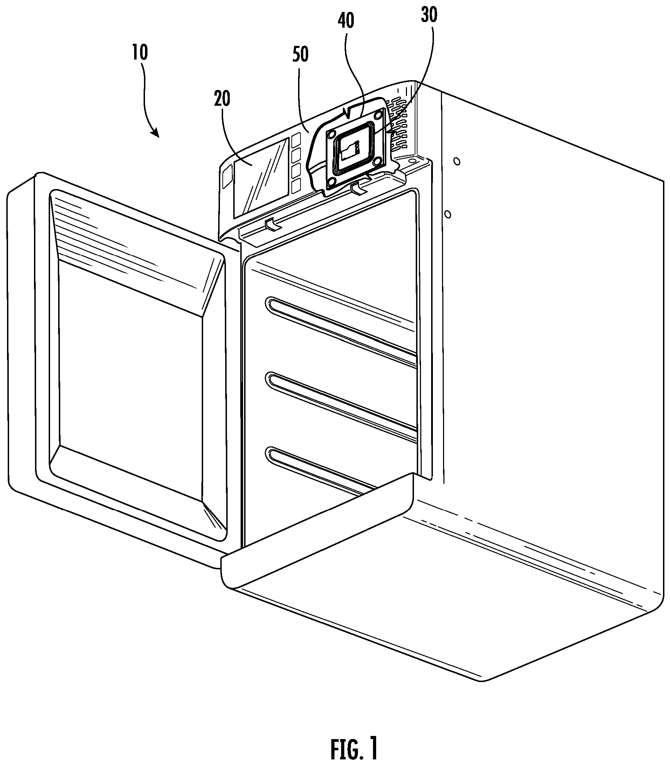

Referring now to the drawings wherein like reference numerals identify similar structural features or elements of the subject invention, there is illustrated in Fig. 1 an aircraft galley insert in the form of an oven 10 for use in an aircraft, which employs the new and useful data transfer system of the subject invention. The data transfer system of the subject invention includes an electronic interface 20. The electronic interface 20 can be in the form of a Human Machine Interface (HMI) or more generally as an electronic control module.

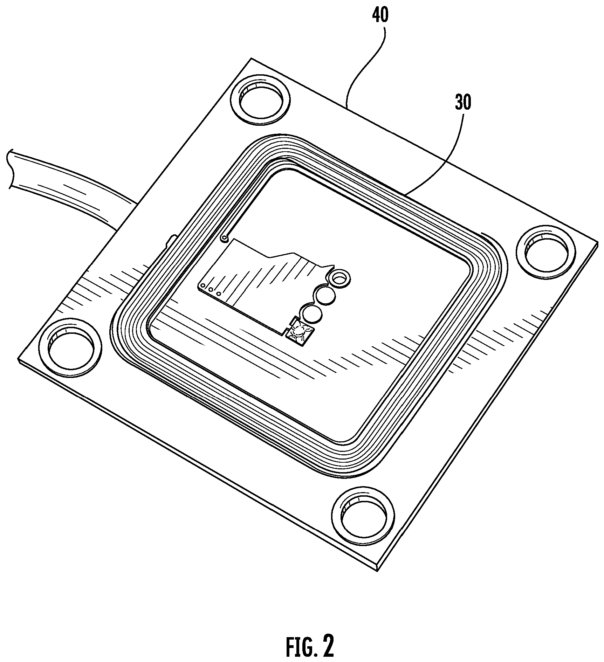

The electronic interface 20 includes an integrated antenna 30 embedded in a Printed Circuit Board (PCB) 40, which is best seen in Fig. 2. Alternatively, antenna 30 could be comprised of separate components that are installed on the PCB 40. As shown in Fig. 1, the PCB 40 is located in a front housing portion 50 of the oven insert 10. However, those skilled the art will readily appreciate that the PCB 40 could be located elsewhere in the oven insert 10.

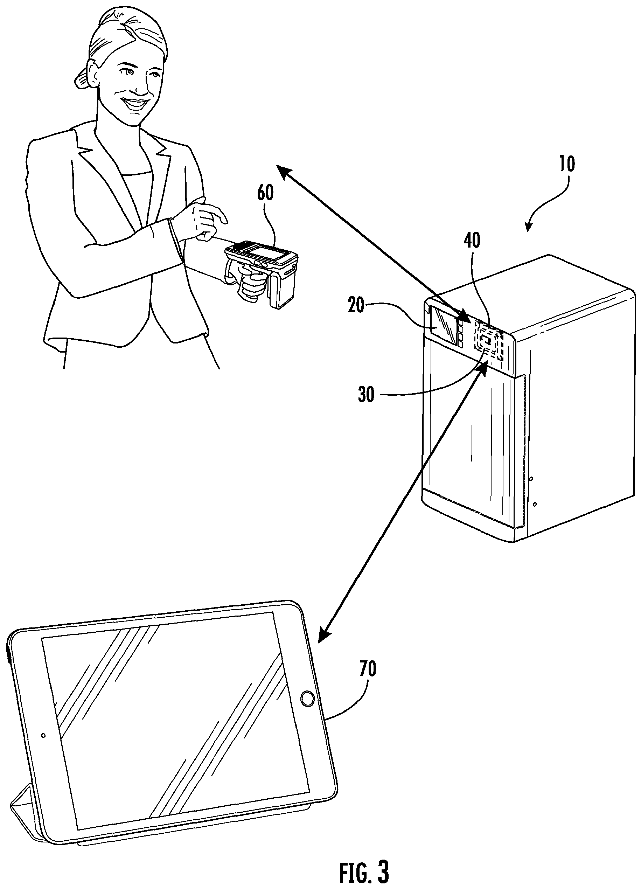

The antenna 30 is configured to utilize a wireless communication protocol to add dynamic log data relating to insert status into a message reported to a maintenance engineer by way of a handheld or otherwise portable wireless reader or scanner 60, as illustrated schematically in Fig. 3.

It is envisioned that the dynamic log data added to the message could consist of oven usage data and/or error data. More particularly, the HMI would compose a tag message that would include usage log data and/or error log data. Examples of oven usage log data includes, but is not limited to, time in use, a number of cooking cycles, a number of operating hours and frequency of activation. Examples of error log data includes, but is not limited to, over temperature occurrences, over current occurrences, motor over speed occurrences and power loss occurrences.

The wireless communication protocol utilized by the electronic interface 20 to send log data through the embedded antenna 30 is a Radio-Frequency Identification (RFID) protocol, and in particular, a Near-Field Communication (NFC) protocol. Thus, the antenna 30 functions as a normally passive, RFID tag by way of the HMI.

RFID is the process by which items are uniquely identified using radio waves, and NFC is a specialized subset within the family of RFID technology. Specifically, NFC is a branch of High-Frequency RFID, and both operate at the 13.56 MHz frequency. NFC is designed to be a secure form of data exchange, and an RFID or NFC device is capable of being both a reader and a tag.

RFID tags or transponders are small devices that utilize low-power radio waves to receive, store, and transmit data to nearby readers. They can be passive or active devices. Here, the device is active. An RFID reader or scanner (e.g., the handheld reader 60) is a radio frequency transmitter and receiver that can read and write information to an RFID tag. RFID readers can be fixed or portable. Here, the reader 60 is preferably a handheld portable device.

In accordance with the subject invention, the antenna 30 of PCB 40 is configured to communicate with a Personal Electronic Device (PED), such as a properly enabled smartphone or tablet 70, as illustrated in Fig. 3. In so doing, the PED 70 can securely download aircraft specific configuration information from a central database that could be used to commission the oven insert 10 upon installation in a particular aircraft type.

In use, the oven insert 10 would be placed into a commissioning state, where it would await configuration settings. This could be done manually or it could occur automatically. In this state, the NFC would be activated and the configuration information would be securely downloaded to the PED 70 from a remote centralized database or from a database located on the aircraft itself. The PED 70 would then make a wireless connection with the oven insert 10 by way of the antenna 30 to securely configure the oven insert 10 to the specific aircraft. Once the oven insert 10 has been configured, a status LED on the front panel of the insert oven could be illuminated to provide authentication for security purposes.

This data transfer system could also be used as a way of updating oven configuration information such as settings or the like after installation in the galley of the aircraft. The antenna 30 could also be configured to support communication between the over insert and an RFID reader during production and/or maintenance. The PED 70 can also be adapted or otherwise programmed to send error reports to a maintenance engineer or to a central repair shop to facilitate or otherwise schedule oven maintenance and/or repair.

While the subject disclosure has been shown and described with reference to preferred embodiments, those skilled in the art will readily appreciate that changes and/or modifications may be made thereto.

For example, while the data transfer system of the subject invention is shown and described with respect to an oven insert, those skilled in the art will readily appreciate that the data transfer system of the subject invention can be utilized in a variety of different aircraft galley inserts used in food and beverage preparation, including for example, water heaters, beverage chillers, espresso machines and other similar appliances.

## Claims

1. A data transfer system for communicating data to and from an aircraft galley insert (10) installed in an aircraft, the data transfer system comprising:
a Personal Electronic Device, PED, (70);
an electronic interface (20) configured to be operatively connected, in use, to the aircraft galley insert (10), the electronic interface (20) including an integrated antenna (30) and being configured to:
generate an insert status of the galley insert (10) and a message including the insert status;
and
utilize a wireless communication protocol to report the message to the Personal Electronic Device, PED, (70) via the antenna (30); and
**characterized in that**
the Personal Electronic Device (70) is configured to communicate with the electronic interface (20) over the wireless communication protocol to receive the message of the insert status from the electronic interface (20), and wherein the Personal Electronic Device (70) is configured and adapted to securely download aircraft configuration information from a database remote from the aircraft and to communicate the configuration information to the electronic interface (20) over the wireless communication protocol to commission the insert to the specific aircraft upon installation in the aircraft and/or to update galley insert information after installation of the galley insert into the aircraft.

2. The data transfer system of Claim 1, wherein the antenna (30) is embedded in or installed on a Printed Circuit Board, PCB, (40).

3. The data transfer system of Claim 2, wherein the PCB (40) is configured to be located in a housing portion (50) of the galley insert, in use.

4. The data transfer system of any preceding Claim, wherein the message further includes at least one of usage log data and error log data.

5. The data transfer system of any preceding Claim, wherein the electronic interface is configured as a Human Machine Interface, HMI.

6. The data transfer system of any preceding Claim, wherein the PED (70) is adapted and configured to update oven configuration information in a database and/or to send error reports to facilitate oven maintenance and/or repair.

7. An oven insert for use in an aircraft galley comprising:
a data transfer system as claimed in any preceding claim; the electronic interface (20) being configured to utilize the wireless communication protocol to add log data relating to oven usage and errors into the message reported to the PED (70).

## Patentansprüche

1. Datenübertragungssystem zum Kommunizieren von Daten zu und von einem in einem Luftfahrzeug installierten Luftfahrzeugbordkücheneinsatz (10), wobei das Datenübertragungssystem umfasst:
eine persönliche elektronische Vorrichtung, PED, (70);
eine elektronische Schnittstelle (20), die konfiguriert ist, um im Gebrauch mit dem Luftfahrzeugbordkücheneinsatz (10) wirkverbunden zu werden, wobei die elektronische Schnittstelle (20) eine integrierte Antenne (30) einschließt und konfiguriert ist, um:
einen Einsatzstatus des Bordkücheneinsatzes (10) und eine Nachricht, die den Einsatzstatus einschließt, zu erzeugen;
und
ein drahtloses Kommunikationsprotokoll zu nutzen, um die Nachricht über die Antenne (30) an die persönliche elektronische Vorrichtung, PED, (70) zu melden; und
**dadurch gekennzeichnet, dass**
die persönliche elektronische Vorrichtung (70) konfiguriert ist, um über das drahtlose Kommunikationsprotokoll mit der elektronischen Schnittstelle (20) zu kommunizieren, um die Nachricht über den Einsatzstatus von der elektronischen Schnittstelle (20) zu empfangen, und wobei die persönliche elektronische Vorrichtung (70) konfiguriert und angepasst ist, um Luftfahrzeugkonfigurationsinformationen sicher von einer von dem Luftfahrzeug entfernten Datenbank herunterzuladen und die Konfigurationsinformationen über das drahtlose Kommunikationsprotokoll an die elektronische Schnittstelle (20) zu kommunizieren, um den Einsatz bei Installation in dem Luftfahrzeug für das spezifische Luftfahrzeug in Betrieb zu nehmen und/oder um Bordkücheneinsatzinformationen nach der Installation des Bordkücheneinsatzes in dem Luftfahrzeug zu aktualisieren.

2. Datenübertragungssystem nach Anspruch 1, wobei die Antenne (30) in eine Leiterplatte, PCB, (40) eingebettet oder auf dieser installiert ist.

3. Datenübertragungssystem nach Anspruch 2, wobei die Leiterplatte (40) konfiguriert ist, um im Gebrauch in einem Gehäuseabschnitt (50) des Bordkücheneinsatzes angeordnet zu sein.

4. Datenübertragungssystem nach einem der vorhergehenden Ansprüche, wobei die Nachricht ferner mindestens eines von Nutzungsprotokolldaten und Fehlerprotokolldaten einschließt.

5. Datenübertragungssystem nach einem der vorhergehenden Ansprüche, wobei die elektronische Schnittstelle als Mensch-Maschine-Schnittstelle, HMI, konfiguriert ist.

6. Datenübertragungssystem nach einem der vorhergehenden Ansprüche, wobei die PED (70) angepasst und konfiguriert ist, um Ofenkonfigurationsinformationen in einer Datenbank zu aktualisieren und/oder Fehlerberichte zu senden, um die Ofenwartung und/oder -reparatur zu erleichtern.

7. Ofeneinsatz zur Verwendung in einer Luftfahrzeugbordküche, umfassend:
ein Datenübertragungssystem nach einem der vorhergehenden Ansprüche; wobei die elektronische Schnittstelle (20) konfiguriert ist, um das drahtlose Kommunikationsprotokoll zu nutzen, um Protokolldaten bezüglich Ofennutzung und Fehlern zu der Nachricht hinzuzufügen, die an die PED (70) gemeldet wird.

## Revendications

1. Système de transfert de données pour la communication de données vers et depuis un insert de cuisine d'avion (10) installé dans un avion, le système de transfert de données comprenant :
un dispositif électronique personnel, PED, (70) ;
une interface électronique (20) configurée pour être connectée de manière fonctionnelle, en utilisation, à l'insert de cuisine d'avion (10), l'interface électronique (20) comportant une antenne intégrée (30) et étant configurée pour :
générer un état d'insert de l'insert de cuisine (10) et un message comportant l'état d'insert ;
et
utiliser un protocole de communication sans fil pour transmettre le message au dispositif électronique personnel, PED, (70) via l'antenne (30) ; et
**caractérisé en ce que**
le dispositif électronique personnel (70) est configuré pour communiquer avec l'interface électronique (20) sur le protocole de communication sans fil afin de recevoir le message de l'état d'insert provenant de l'interface électronique (20), et dans lequel le dispositif électronique personnel (70) est configuré et conçu pour télécharger de manière sécurisée des informations de configuration d'avion à partir d'une base de données distante de l'avion et pour communiquer les informations de configuration à l'interface électronique (20) sur le protocole de communication sans fil afin de mettre en service l'insert pour l'avion spécifique lors de son installation dans l'avion et/ou de mettre à jour les informations d'insert de cuisine après l'installation de l'insert de cuisine dans l'avion.

2. Système de transfert de données de la revendication 1, dans lequel l'antenne (30) est intégrée ou installée sur une carte de circuit imprimé, PCB, (40).

3. Système de transfert de données de la revendication 2, dans lequel la PCB (40) est configurée pour être située dans une partie de boîtier (50) de l'insert de cuisine, en utilisation.

4. Système de transfert de données selon une quelconque revendication précédente, dans lequel le message comporte en outre au moins l'une parmi des données de journal d'utilisation et des données de journal d'erreurs.

5. Système de transfert de données selon une quelconque revendication, dans lequel l'interface électronique est configurée comme une interface homme-machine, IHM.

6. Système de transfert de données selon une quelconque revendication, dans lequel le PED (70) est conçu et configuré pour mettre à jour des informations de configuration de four dans une base de données et/ou pour envoyer des rapports d'erreurs afin de faciliter la maintenance et/ou la réparation du four.

7. Insert de four pour une utilisation dans une cuisine d'avion comprenant :
un système de transfert de données selon une quelconque revendication précédente ; l'interface électronique (20) étant configurée pour utiliser le protocole de communication sans fil afin d'ajouter des données de journal relatives à l'utilisation du four et aux erreurs dans le message transmis au PED (70).
